# EUROPÄISCHE PATENTSCHRIFT

(11) **EP 2 899 392 B1**
(45) Veröffentlichungstag und Bekanntmachung des Hinweises auf die Patenterteilung: **01.05.2019**
(21) Anmeldenummer: 15152041.8
(22) Anmeldetag: 21.01.2015
(51) Int. Cl.: F02M 55/02, F16L 55/033

(54) **Nach dem Feder-Masse-Prinzip arbeitender Schwingungstilger**
Vibration damper operating according to the spring-mass principle
Amortisseur d'oscillations travaillant selon le principe masse-ressort

(30) Priorität: 23.01.2014 DE 102014100781
(43) Veröffentlichungstag der Anmeldung: 29.07.2015
(73) Patentinhaber: Guido, Hans-Jürgen, 93073 Neutraubling (DE)
(72) Erfinder: Ernst, Jürgen, 94348 Atting (DE); Guido, Hans-Jürgen, 93073 Neutraubling (DE)
(74) Vertreter: Strasser, Wolfgang

(56) Entgegenhaltungen:
- EP-A1- 2 072 801
- DE-A1- 3 025 601
- JP-A- 2012 225 476
- JP-U- H0 161 452
- US-A1- 2010 219 301
- US-A1- 2010 243 855
- US-A1- 2014 001 000

## Beschreibung

Die Erfindung betrifft einen nach dem Masse-Feder-Prinzip arbeitenden Schwingungstilger der im Oberbegriff von Anspruch 1 genannten Art.

Solche Schwingungstilger, die in der Fachliteratur auch als Resonanztilger, Schwingungsisolatoren, Resonanzdämpfer, abgestimmte Massendämpfer oder Masse-Feder-Dämpfersysteme bezeichnet werden, kommen unter anderem an Einspritzleitungen, insbesondere von Dieselmotoren zum Einsatz. Ein wesentliches Kennzeichen dieser Schwingungstilger ist, dass sie nur mit dem Bauteil in Verbindung stehen, dessen Schwingungen gedämpft werden sollen, nicht aber zur Befestigung und/oder Verbindung dieses Bauteils mit irgendwelchen anderen Körpern dienen.

Moderne Einspritzsysteme arbeiten mit zunehmend schnelleren Injektoren und mehreren Einspritzvorgängen pro Motorumdrehung und Zylinder bei immer höheren Einspritzdrücken. Die hydraulischen Druckstöße in den Einspritzleitungen, verursacht durch die Öffnungs- und Schließvorgänge der Injektoren, werden dadurch immer intensiver und erreichen immer höhere Frequenzen.

In Folge dessen können die Einspritzleitungen immer häufiger mit einer ihrer natürlichen Eigenfrequenzen zu Resonanz-Schwingungen angeregt werden, wodurch die Gefahr entsteht, dass es zu einem Versagen durch Bruch der Einspritzleitung kommt.

Dieses Problem kann durch das Anbringen eines Gummi- oder Gummi-Metall-Schwingungstilgers auf der Einspritzleitung vermieden werden.

Bekannte Gummi-Metall-Schwingungstilger haben eine hohlzylindrische Form, wobei der Durchmesser des Innenhohlraums in etwa gleich dem Außendurchmesser der Einspritzleitung ist, auf welcher der Schwingungstilger montiert werden soll.

Die Wirkung der bekannten Schwingungstilger basiert auf dem Masse-Feder-System mit Dämpfung. Der Schwingungstilger ist in der Lage, Resonanzfrequenzen der Einspritzleitung effizient zu unterdrücken, solange diese um den Faktor √2 (Quadratwurzel aus 2) über der natürlichen Eigenfrequenz des Schwingungstilgers liegen.

Um ein möglichst breites Frequenzband wirksam dämpfen zu können, muss der Schwingungstilger eine möglichst niedrige natürliche Eigenfrequenz aufweisen. Zu diesem Zweck müssen die bekannten Schwingungstilger ein vergleichsweise hohes Gewicht aufweisen und möglichst dickwandig sein. Ein Gummiformteil, das diese Eigenschaften aufweist, um als Schwingungstilger geeignet zu sein, ist jedoch hinsichtlich der Kosten und des erforderlichen Baumraums am Motor nachteilig.

Die Druckschriften US 2010/0219301 A1, US 2010/0243855 A1 und DE 30 25 601 A1 beschreiben Vorrichtungen, die dazu dienen, ein Rohr an einem anderen Körper zu befestigen. Zwar können diese zu Montagezwecken dienenden Rohr- oder Kabelschellen ebenfalls eine schwingungsdämpfende Wirkung haben, doch beruht diese nicht auf dem Masse-Feder-Prinzip sondern der starken Kopplung mit einem selbst nicht oder nur wenig schwingenden Körper, wie zum Beispiel einer Gebäudewand oder dergleichen. Nachteilig an diesen bekannten Rohrschellen ist, dass sie nur dann verwendet werden können, wenn die betreffende Rohrleitung in unmittelbarer Nähe eines anderen, massereichen, selbst nicht oder nur wenig schwingenden Körpers verläuft. Dadurch sind die Einsatzmöglichkeiten solcher Befestigungsvorrichtungen erheblich eingeschränkt. Auch haben sie meist eine komplexe Struktur und/oder besitzen mehrere gegeneinander bewegbare, häufig durch ein Gelenk miteinander verbundene Teile. Eventuelle Schwingungen des massereichen Körpers selbst können sie keinesfalls dämpfen. Weiterhin ist ihre Montage vergleichsweise aufwendig, da sie nicht nur mit der jeweiligen Rohrleitung verbunden sondern auch an dem betreffenden anderen Körper befestigt werden müssen.

Lediglich die EP 2 072 801 A1 und die JP 2012 225 476 A zeigen nach dem Masse-Feder-Prinzip arbeitende Schwingungsdämpfer, die jedoch keine über die Außenkontur des Grundkörpers in radialer Richtung vorstehenden Exzenterteile aufweisen. Sie müssen ebenso wie die oben erwähnten, aus dem Stand der Technik bekannten und nach dem Masse-Feder-Prinzip arbeitenden Schwingungstilger für Einspritzleitungen von Dieselmotoren, welche die Form eines glatten Hohlzylinders besitzen, zur Erreichung einer möglichst niedrigen natürlichen Eigenfrequenz ein vergleichsweise hohes Gewicht und eine große Wandstärke aufweisen. Ein Gummiformteil mit derartigen Eigenschaften ist hinsichtlich seiner Kosten und des erforderlichen Bauraums am Motor nachteilig.

Die US 2014/0001000 A1 beschreibt Schwingungstilger für beispielsweise von Treibstoff durchströmte Rohre, wobei diese Schwingungstilger jeweils die Form eines hohlzylindrischen Körpers aufweisen, aus dessen Zylinderwand ein sich über die gesamte axiale Länge erstreckender Wandbereich herausgeschnitten ist, so dass eine aufspreizbare Aufnahmeöffnung entsteht, mit deren Hilfe er auf das jeweilige Rohr aufgeschoben werden kann. Bei einem in Figur 7 dieser Druckschrift gezeigten Ausführungsbeispiel trägt der hohlzylindrische Körper eine Vielzahl von nach außen vorstehenden und sich jeweils über einen Teil der äußeren Oberfläche des Körpers erstreckenden Wulsten, die ihm eine unregelmäßig exzentrische Masseverteilung verleihen. Diese exzentrische Ausbildung führt dazu, dass der Schwingungsdämpfer Drehschwingungen um die Rohrachse ausführen kann, die bei rotationssymmetrischen Schwingungstilgern nicht auftreten. Das Schwingungs-Dämpfungsverhalten der in dieser Druckschrift beschriebenen Schwingungsdämpfer ist jedoch sehr schwer zu durchschauen bzw. auf bestimmte, im jeweiligen Anwendungsfall auftretende Schwingungsfrequenzen abzustimmen.

Demgegenüber liegt der Erfindung die Aufgabe zugrunde, einen Schwingungstilger der eingangs genannten Art zu schaffen, der bei gleicher Dämpfungswirksamkeit ein deutlich geringeres Gewicht, ein kleineres Volumen und eine kleinere Wandstärke als die bekannten Schwingungstilger aufweist und auf einfache Weise auf im jeweiligen Anwendungsfall besonders störende Schwingungsfrequenzen abgestimmt werden kann.

Zur Lösung dieser Aufgabe sieht die Erfindung die im Anspruch 1 niedergelegten Merkmale vor.

Die exzentrische Ausbildung der erfindungsgemäßen Schwingungstilger führt dazu, dass sie Drehschwingungen um die Rohrachse der Einspritzleitung ausführen, die bei den rotationssymmetrischen Schwingungstilgern gemäß dem Stand der Technik nicht auftreten. Diese Drehschwingungen liegen in ihrer natürlichen Eigenfrequenz deutlich tiefer als die Schwingungen der bekannten Schwingungstilger. Es lässt sich ein Faktor 5 erzielen, was es ermöglicht, bei gleicher Grundfrequenz das Gewicht des Schwingungstilgers um den Faktor 25 zu reduzieren.

Durch die erfindungsgemäße Ausbildung kann der Grundkörper bei der Montage an den beiden Exzenterteilen erfasst und diese dann aufeinander zu gedrückt werden, sodass sich der von ihren Exzentrizitätsachsen eingeschlossene Winkel verkleinert und sich der an der gegenüberliegenden Mantellinie vorhandene Spalt öffnet. Ist dann das Einspritzleitungsrohr durch diesen Spalt in den Innenhohlraum des Grundkörpers eingeführt, werden die beiden Exzenterteile losgelassen und der elastisch verformte Grundkörper kehrt weitestgehend in seine Ursprungsform zurück, sodass sich ein drehfester Eingriff mit dem Einspritzleitungsrohr ergibt.

Die beiden Exzentermassen können mit dem Grundkörper einstückig ausgebildet oder als gesonderte Bauteile an ihm drehfest montiert sein.

Im erstgenannten Fall können der Grundkörper und die Exzentermassen aus dem gleichen Material bestehen. Alternativ hierzu ist es in beiden Fällen aber auch möglich, dass der Grundkörper aus einem elastomeren, schwingungsdämpfenden Material besteht, während beispielsweise die Exzentermassen von einem Metallkörper gebildet werden, der von außen angesetzt oder in das Material des Grundkörpers exzentrisch eingebettet ist

Wesentlich ist, dass der Masseschwerpunkt des Schwingungstilgers nicht auf der im montierten Zustand mit der Achse des Einspritzleitungsrohrs zusammenfallenden Längsachse des Innenhohlraums des Schwingungstilgers liegt, sondern gegen diese radial nach außen versetzt angeordnet ist. Die Radialstrahlen, welche die Längsachse des Innenhohlraums des Schwingungstilgers mit den Masseschwerpunkten der Exzentermassen verbinden, werden im vorliegenden Zusammenhang als Exzentrizitätsachsen bezeichnet.

Es ist bevorzugt, dass die Exzentrizitätsachsen der beiden Exzentermassen einen Winkel von 90° miteinander einschließen.

Diese und weitere vorteilhafte Ausgestaltungen eines erfindungsgemäßen Schwingungstilgers sind in den Unteransprüchen niedergelegt.

Die Erfindung wird im Folgenden anhand von Ausführungsbeispielen unter Bezugnahme auf die Zeichnung beschrieben; in dieser zeigen nur die Fig. 7 bis 12, 15 und 16 sowie 19 bis 25 unter den Anspruch 1 fallende Schwingungstilger gemäß der Erfindung; im Einzelnen zeigen
- Fig. 1: eine perspektivische Ansicht eines Schwingungstilgers mit einem prismatischen Exzenterteil;
- Fig. 2: eine Draufsicht auf den Schwingungstilger aus Fig. 1 in Richtung des Pfeiles II;
- Fig. 3: eine perspektivische Ansicht eines Schwingungstilgers mit einem halbzylindrischen Exzenterteil;
- Fig. 4: eine Draufsicht auf den Schwingungstilger aus Fig. 3 in Richtung des Pfeiles IV;
- Fig. 5: eine perspektivische Ansicht eines Schwingungstilgers mit einem aufgestecktem Zusatzelement;
- Fig. 6: eine Draufsicht auf den Schwingungstilger aus Fig. 5 in Richtung des Pfeiles VI;
- Fig. 7: eine perspektivische Ansicht eines erfindungsgemäßen Schwingungstilgers mit zwei prismatischen Exzenterteilen;
- Fig. 8: eine Draufsicht auf den Schwingungstilger aus Fig. 7 in Richtung des Pfeiles VIII;
- Fig. 9: eine perspektivische Ansicht eines erfindungsgemäßen Schwingungstilgers mit zwei halbzylindrischen Exzenterteilen;
- Fig. 10: eine Draufsicht auf den Schwingungstilger aus Fig. 9 in Richtung des Pfeiles X;
- Fig. 11: eine perspektivische Ansicht eines erfindungsgemäßen Schwingungstilgers mit zwei aufgesteckten Zusatzelementen;
- Fig. 12: eine Draufsicht auf den Schwingungstilger aus Fig. 11 in Richtung des Pfeiles XII;
- Fig. 13: eine perspektivische Ansicht eines -Schwingungstilgers mit einem quaderförmigen Exzenterteil;
- Fig. 14: eine Draufsicht auf den Schwingungstilger aus Fig. 13 in Richtung des Pfeiles XIV;
- Fig. 15: eine perspektivische Ansicht eines erfindungsgemäßen Schwingungstilgers mit zwei quaderförmigen Exzenterteilen;
- Fig. 16: eine Draufsicht auf den Schwingungstilger aus Fig. 15 in Richtung des Pfeiles XVI;
- Fig. 17: eine perspektivische Ansicht eines Schwingungstilgers mit drei quaderförmigen Exzenterteilen;
- Fig. 18: eine Draufsicht auf den Schwingungstilger aus Fig. 17 in Richtung des Pfeiles XVIII;
- Fig. 19: eine perspektivische Ansicht eines erfindungsgemäßen Schwingungstilgers mit zwei im Querschnitt T-förmigen Exzenterteilen;
- Fig. 20: eine perspektivische Ansicht eines zum Schwingungstilger aus Fig. 19 gehörenden Befestigungselementes;
- Fig. 21: einen Schnitt durch den Schwingungstilger aus Fig. 19 in einer Ebene senkrecht zu seiner Längsachse mit montiertem Befestigungselement;
- Fig. 22: eine perspektivische Ansicht in vergrößertem Maßstab des Schwingungstilgers aus Fig. 19 mit montiertem Befestigungselement;
- Fig. 23: eine perspektivische Ansicht eines erfindungsgemäßen Schwingungstilgers mit zwei im Querschnitt T-förmigen Exzenterteilen und einem vormontierten Befestigungselement;
- Fig. 24: eine perspektivische Ansicht des Schwingungstilgers aus Fig. 23 im fertig montierten Zustand, wobei das Einspritzleitungsrohr der Deutlichkeit halber weggelassen ist; und
- Fig. 25: einen Schnitt durch den Schwingungstilger aus Fig. 24 senkrecht zu seiner Längsachse.

In allen Figuren sind gleiche, bzw. einander entsprechende Teile mit denselben Bezugszeichen bezeichnet.

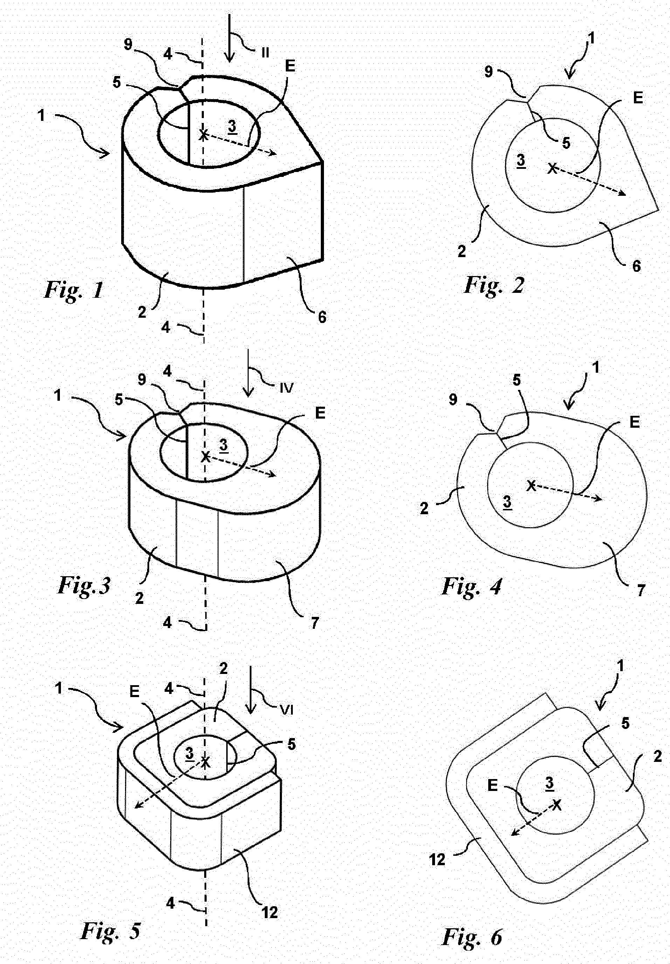

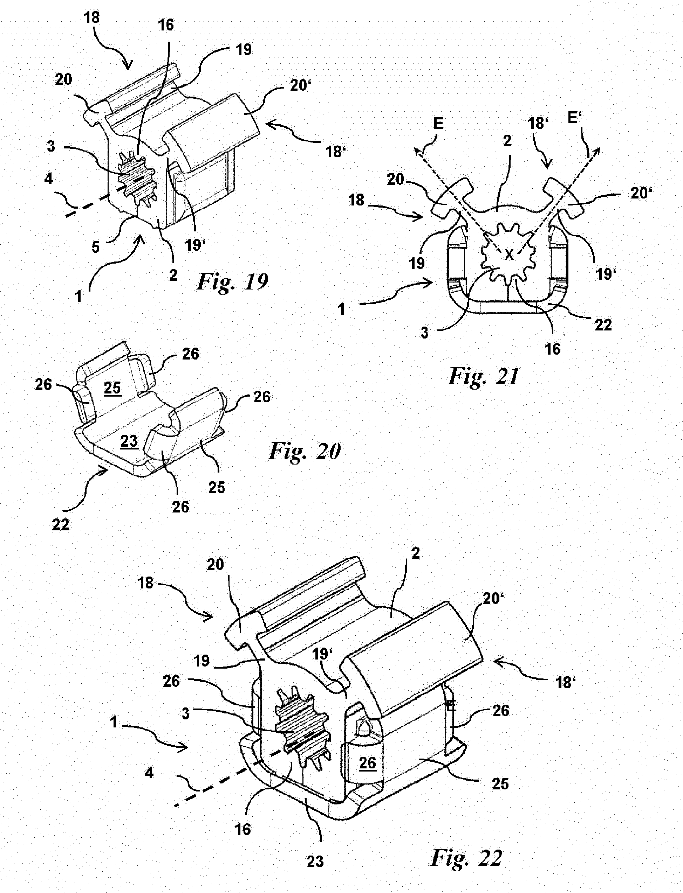

In den Fig. 1 mit 4 und 7 mit 10 sind Schwingungstilger 1 dargestellt, von denen jeder einen hohlzylindrischen Grundkörper 2 mit einem durchgehenden Innenhohlraum 3 aufweist, dessen Innendurchmesser an den Außendurchmesser des Einspritzleitungsrohres (nicht dargestellt) angepasst ist, auf dem der Schwingungstilger 1, beispielweise mit Hilfe einer Klebeverbindung oder durch Reibschluss drehfest so montiert werden soll, dass die Längsachse 4 des Innenhohlraums 3 mit der Längsachse des Einspritzleitungsrohrs zusammenfällt. Um den Reibschluss auch bei ungünstiger Toleranzlage zu verbessern, kann vorgesehen sein, die Innenfläche des Innenhohlraums 3 aufgeraut oder verzahnt auszuführen, wie dies weiter unten unter Bezugnahme auf die Figuren 19 bis 25 noch genauer erläutert wird.

Auch die in den Figuren 5 und 6 bzw. 11 und 12 dargestellten Schwingungstilger besitzen einen in gleicher Weise ausgebildeten und dem gleich Zweck dienenden Innenhohlraum 3 mir kreisförmigem Querschnitt, doch weisen ihre Grundkörper 2 in einem zur Längsachse 4 senkrechten Querschnitt eine in etwa quadratische Außenkontur mit abgerundeten Ecken auf.

Um den jeweiligen Schwingungstilger 1 senkrecht zur Längsachse 4 auf ein Einspritzleitungsrohr aufschieben zu können, ist die Außenwand des Grundkörpers 2 längs einer Mantellinie 5 über die gesamte Höhe hinweg aufgeschnitten, so dass der Grundkörper 2 an dieser Mantellinie 5 aufgespreizt werden kann, um das Hindurchtreten des Einspritzleitungsrohrs durch die dabei entstehende Öffnung in den Innenhohlraum 3 des Schwingungstilgers 1 zu ermöglichen. Um das Aufspreizen zu erleichtern, kann eine sich über die gesamte axiale Länge des Grundkörpers 2 erstreckende, im Querschnitt in etwa V-förmige Kerbe 9 vorgesehen sein (in den Fig. 5, 6, und 11, 12 nicht dargestellt), die sich von der Außenfläche des Grundkörpers 2 ausgehend über einen Teil seiner Wandstärke in radialer Richtung nach innen erstreckt und mit ihrer Spitze an der Schnittlinie 5 endet.

Bei dem nicht erfindungsgemäßen Beispiel der Fig. 1 und 2 wird die Exzentermasse von einem prismatischen Exzenterteil 6 gebildet, das an den Grundkörper 2 des Schwingungstilgers 1 einstückig angeformt ist, sich über die gesamte axiale Höhe bzw. Länge des Grundkörpers 2 erstreckt und in der Draufsicht der Fig. 2 eine in etwa dreieckige Außenkontur besitzt.

Durch die Exzentrizitätsachse E ist angedeutet, dass durch diesen Exzenterteil 6 die zur Längsachse 4 parallele Schwerpunktslinie des gesamten Schwingungstilgers 1 in radialer Richtung nach außen verschoben ist.

Die Fig. 3 und 4 zeigen einen nicht erfindungsgemäßen Schwingungstilger 1, der im Wesentlichen den gleichen Aufbau wie der Schwingungstilger aus den Fig. 1 und 2 besitzt und sich von diesem lediglich darin unterscheidet, dass sein Exzenterteil 7 in der Draufsicht der Fig. 4 eine halbkreisförmige Außenkontur aufweist, wobei der Mittelpunkt dieses Halbkreises gegen die Längsachse 3 in radialer Richtung nach außen verschoben ist.

Der in den Fig. 5 und 6 dargestellte nicht erfindungsgemäße Schwingungstilger 1 besitzt in der Draufsicht in Richtung der Fig. 6 einen Querschnitt mit im Wesentlichen quadratischer Außenkontur wobei die Ecken abgerundet sind. Auch hier ist der Grundkörper 2 längs einer Mantellinie aufgeschnitten, wie dies durch die Schnittlinie 5 angedeutet ist. Die Kerbe 9 ist hier zwar der Deutlichkeit halber nicht wiedergegeben, kann aber in der gleichen Weise vorgesehen werden, wie bei den Schwingungstilgern der Fig. 1 bis 4.

Die Exzentermasse wird hier von einem Zusatzelement 12 gebildet, dass die gleiche axiale Länge besitzen kann wie der Grundkörper 2 und auf diesen so aufgesteckt ist, dass es drei seiner Seiten in etwa C-förmig umschließt. Dieses Zusatzelement 12 kann aus einem anderen, insbesondere schwereren Material als der Grundkörper 2 des Schwingungstilgers 1 bestehen, um eine erhöhte Dämpfungswirkung zu erzielen.

Da die bisher beschriebenen Schwingungstilger nur Bewegungen senkrecht zur jeweiligen Exzentrizitätsachse E mit Drehschwingungen dämpfen, ist es erforderlich, wenigstens zwei derartige Schwingungstilger an ein und derselben Einspritzleitung drehfest so zu befestigen, dass ihre Exzentrizitätsachsen miteinander vorzugsweise einen Winkel von 90° einschließen, damit deren Schwingungen in allen Richtungen senkrecht zur Rohrachse gleichermaßen gedämpft werden.

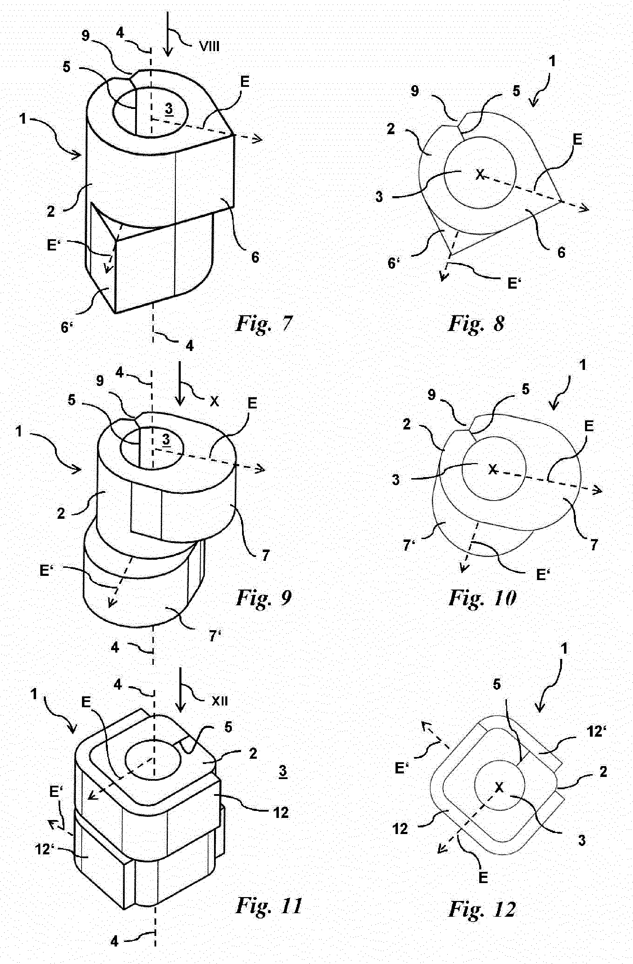

Um die Montage zu vereinfachen, umfasst jeder der in den Fig. 7 bis 10 dargestellten Schwingungstilger jeweils zwei Exzentermassen, die so ausgerichtet sind, dass ihre Exzentrizitätsachsen E, E' miteinander einen Winkel von 90° einschließen.

Bei dem Ausführungsbeispiel der Fig. 7, 8 werden die Exzentermassen von zwei einstückig an den Grundkörper 2 angeformten Exzenterteilen 6, 6' gebildet, die in axialer Richtung unmittelbar aneinander anschließen und die gleiche Form wie das Exzenterteil 6 aus den Fig. 1 und 2 besitzen.

Bei dem in den Fig. 9 und 10 dargestellten Ausführungsbeispiel weisen die beiden Exzenterteile 7, 7', deren Form der des Exzenterteils 7 aus den Fig. 3 und 4 entspricht, in Richtung der Längsachse 4 einen axialen Abstand auf, der aber nicht zwingend erforderlich ist.

Umgekehrt kann auch bei dem Ausführungsbeispiel der Fig. 7 und 8 ein derartiger axialer Abstand der Exzenterteile 6, 6' vorgesehen sein.

Das in den Fig. 11 und 12 gezeigte Ausführungsbeispiel entspricht in etwa demjenigen der Fig. 5 und 6, doch besitzt hier der Grundkörper 2 eine solche axiale Länge, dass auf ihn zwei Zusatzelemente 12, 12' aufgesteckt werden können, deren Exzentrizitätsachsen E, E' ebenfalls um 90° gegeneinander verdreht angeordnet sind. Wesentlich bei allen diesen Ausführungsformen ist, dass die Schwingungstilger auf dem betreffenden Einspritzleitungsrohr drehfest montiert werden, was beispielsweise durch Aufkleben erfolgen kann. Zu diesem Zweck wird zwischen der Innenfläche des jeweiligen Hohlzylinders 2 und der Außenseite des (nicht dargestellten) Einspritzleitungsrohrs eine geeignete Kleberschicht vorgesehen.

Alternativ hierzu ist es aber auch möglich, den Innendurchmesser des Innenhohlraums 3 des Grundkörpers 2 um so viel kleiner als den Außendurchmesser des zu dämpfenden Einspritzleitungsrohrs zu wählen, dass der Grundkörper 2 aufgrund seiner Elastizität im Reibschluss drehfest mit dem Einspritzleitungsrohr verbunden ist.

Nicht erfindungsgemäß ist es auch möglich, mehr als zwei der in den Fig. 1 bis 6 dargestellten Schwingungstilger auf ein und demselben Einspritzleitungsrohr zu befestigen, wobei die Exzentrizitätsachsen vorzugsweise alternierend um 90° gegeneinander verdreht sind.

In entsprechender Weise können auch mehrere der in den Fig. 7 bis 12 gezeigten Schwingungstilger an ein und demselben Einspritzleitungsrohr drehfest montiert werden.

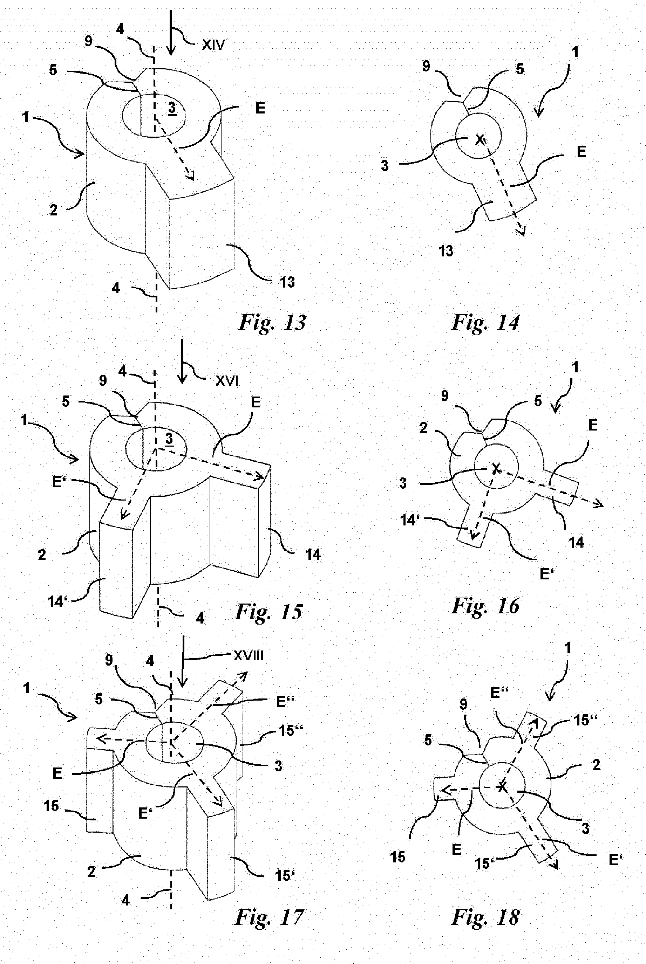

Der in den Fig. 13 und 14 wiedergegebene nicht erfindungsgemäße Schwingungstilger 1 entspricht im Wesentlichen den nicht erfindungsgemäßen Beispielen aus den Fig. 1 bis 6, d.h. er weist nur ein Exzenterteil 13 auf, das hier quaderförmig ausgebildet ist, in radialer Richtung über die Mantelfläche des Grundkörpers 2 vorsteht und sich über dessen gesamte axiale Länge erstreckt. Von diesem Schwingungstilger werden vorzugsweise wenigstens zwei auf einem Einspritzleitungsrohr drehfest montiert, um eine gute Schwingungsdämpfung zu erzielen.

Bei dem Ausführungsbeispiel in den Fig.15 und 16 trägt der Grundkörper 2 zwei Exzenterteile 14 und 14', die ähnlich wie das Exzenterteil 13 in den Fig. 13 und 14 ausgebildet sind, sich ebenfalls über die gesamte axiale Länge des Grundkörpers 2 erstrecken und zentrisch zu zwei Radialebenen angeordnet sind, die miteinander einen Winkel von ca. 90° einschließen. Hier genügt es, nur einen einzigen derartigen Schwingungstilger 1 auf einem Einspritzleitungsrohr drehfest zu montieren, um die gewünschte Schwingungsdämpfung zu erreichen. Es können jedoch auch mehrere solcher Schwingungstilger 1 an einem einzigen Einspritzleitungsrohr befestigt werden. Die beiden genannten Radialebenen können auch einen beliebigen anderen Winkel miteinander einschließen, der allerdings von 180° verschieden sein sollte. Die Erstreckung der beiden Exzenterteile 14 und 14' in radialer Richtung (Richtung der Pfeile E und E') kann gleich oder unterschiedlich sein.

Bei den nicht erfindungsgemäßen Beispielen, die in den Fig. 17 und 18 gezeigt sind, ist der Grundkörper 2 mit drei Exzenterteilen 15, 15', 15" verbunden, deren Radialebenen jeweils einen Winkel von 120° miteinander einschließen. Um hier eine exzentrische Masseverteilung zu erzielen, ist vorgesehen, dass sich wenigstens zwei, vorzugsweise alle drei Exzenterteile 15, 15' und 15" in radialer Richtung unterschiedlich weit erstrecken, sodass die Masseschwerlinie dieses Schwingungstilgers 1 nicht mit der Längsachse 4 zusammenfällt.

Sowohl bei den nicht erfindungsgemäßen Beispielen der Fig. 13, 14, 17 und 18 als auch bei den erfindungsgemäßen Ausführungsformen der Fig. 15 und 16 können das oder die Exzenterteile mit dem jeweiligen Grundkörper 2 einstückig ausgebildet oder an ihm fest montiert sein. Sie können aus dem gleichen oder einem anderen Material wie der jeweilige Grundkörper 2 bestehen.

Die in den Fig. 19 bis 25 dargestellten Ausführungsbeispiele unterscheiden sich von den vorausgehend beschriebenen zunächst einmal dadurch, dass hier an der prinzipiell kreiszylindrischen Innenwand des Innenhohlraums 3 der Grundkörper 2 eine radial zur Längsachse 4 hin verlaufende, sich über die ganze axiale Länge des Grundkörpers 2 erstreckende Verzahnung 16 vorgesehen ist, die von zackenförmigen nach innen vorstehenden Vorsprüngen gebildet wird, die zur Längsachse 4 symmetrisch angeordnet sind und deren radiale Erstreckung so bemessen ist, dass ihre innen liegenden Scheitel im montierten Zustand mit der Außenwand des zu dämpfenden Einspritzleitungsrohrs (nicht dargestellt) in einen eine drehfeste Befestigung ermöglichenden Eingriff treten.

Diese Ausbildung hat den Vorteil, dass der gesamte Grundkörper 2 um seine im montierten Zustand mit der Längsachse des Einspritzleitungsrohrs zusammenfallende Längsachse 4 Drehschwingungen ausüben kann, die ebenfalls zur Dämpfung der Schwingungen des Einspritzleitungsrohrs beitragen.

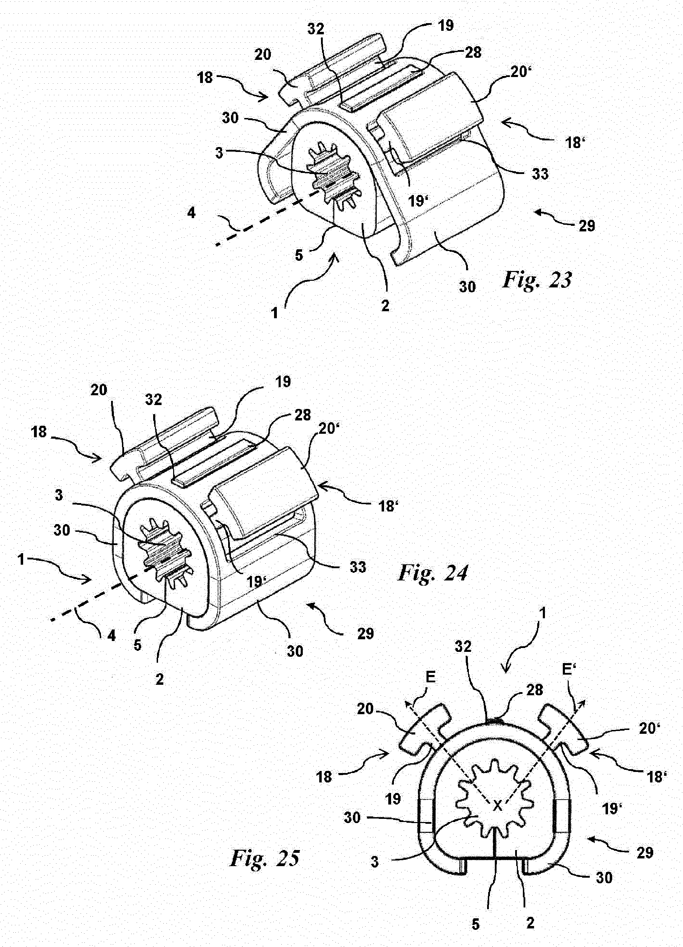

Auch hier sind an dem einen in etwa quadratischen Querschnitt besitzenden Grundkörper 2 zwei Exzenterteile 18, 18' vorgesehen, die aus einem längs einer der Längskanten des Grundkörpers 2 verlaufenden Steg 19, 19' und einem an der vom Grundkörper 2 entfernt liegenden Stirnseite dieser Stege 19, 19' angeordneten Flanschteil 20, 20' bestehen. Die beiden Stege 19, 19' erstrecken sich bezüglich der Längsachse 4 des Grundkörpers 2 in radialer Richtung und ihre Exzentrizitätsachsen E, E' schließen miteinander einen Winkel von etwa 90° ein, wie dies in den Fig. 21 und 25 dargestellt ist. In diesen Schnittansichten hat jedes der beiden Exzenterteile 18, 18' einen in etwa T-förmigen Querschnitt.

Wie man den Fig. 19, 21 und 22 entnehmen kann, ist auch hier der Grundkörper 2 längs einer seiner Mantellinien 5, d.h. hier etwa in der Mitte seiner unteren Außenfläche, mit einem sich über seine gesamte axiale Länge erstreckenden Schlitz versehen, der seine Montage auf dem zu dämpfenden Einspritzleitungsrohr ermöglicht. Die bei den in den Fig. 1 bis 18 gezeigten Ausführungsbeispielen vorhandene V-förmige Kerbe 9 wird hier nicht benötigt, weil der Grundkörper 2 bei der Montage an den beiden Exzenterteilen 18, 18' erfasst werden kann, worauf diese aufeinander zu gedrückt werden, sodass sich der von ihren Exzentrizitätsachsen E, E' eingeschlossene Winkel verkleinert und sich der an der gegenüberliegenden Mantellinie 5 vorhandene Spalt öffnet. Ist dann das Einspritzleitungsrohr durch diesen Spalt in den Innenhohlraum 3 eingeführt, werden die beiden Exzenterteile 18, 18' losgelassen und der elastisch verformte Grundkörper 2 kehrt in seine Ursprungsform zurück, sodass die nach innen vorstehenden Verzahnung 16 gegen die Außenwand des Einspritzleitungsrohrs für einen drehfesten Eingriff angedrückt wird.

Die Drehfestigkeit der dadurch hergestellten Verbindung zwischen dem Grundkörper und dem Einspritzleitungsrohr kann dadurch verstärkt werden, dass ein in Fig. 20 gesondert dargestelltes, plastisch verformbares, beispielsweise aus Metall bestehendes Befestigungselement 22 vorgesehen ist, das, wie in den Fig. 21 und 22 gezeigt, auf den Grundkörper 2 aufgequetscht wird, diesen zumindest von drei Seiten hier C-förmig umschließt und zusammendrückt.

Um dies zu ermöglichen, weist das Befestigungselement 22 eine zum Grundkörper 2 hin leicht konkave, in ihrer Form an die Außenkontur der Unterseite des Grundkörpers 2 angepasste Bodenplatte 23 auf, von deren Längskanten jeweils eine einstückig angeformte Lasche 25 nach oben so absteht, dass die von der Bodenplatte 23 entfernt liegenden Oberkanten der Laschen 25, 25 einen größeren Abstand aufweisen als ihre mit der Bodenplatte 23 verbundenen unteren Kanten. Dadurch kann das Befestigungselement 22 bei der Montage auf einfache Weise von unten her an den auf das zu dämpfende Einspritzleitungsrohr aufgesetzten Grundkörper 2 des Schwingungstilgers 1 angesetzt werden, worauf dann die beiden Laschen 25, 25 unter plastischer Verformung des Befestigungselementes 22 zusammengedrückt werden, um an den Seitenflächen des Grundkörpers 2 zur Anlage zu kommen und die an der Innenwand seines Innenhohlraums 3 ausgebildete Verzahnung 16 gegen die Außenwand des Einspritzleitungsrohrs anzudrücken.

Um eine dauerhafte Verbindung zwischen dem Grundkörper 2 des Schwingungstilgers 1 und dem Befestigungselement 22 zu gewährleisten, weist jede der beiden Laschen 25, 25 an jeder ihrer Seitenkanten einen kleinen Vorsprung 26, 26 auf, der bei der Montage des Befestigungselementes 22 auf dem Grundkörper 2 zu dessen axial gerichteten Stirnflächen hin umgebogen werden kann, sodass der Grundkörper 2 zwischen diesen Vorsprüngen 26 eingeschlossen ist.

Die obere Kante einer jeden Lasche 25 ist etwas nach innen umgebogen, sodass sie sich beim Zusammendrücken der Laschen 25, 25 während der Montage des Befestigungselementes 22 am Grundkörper 2 in dessen Material hineindrückt und somit zu dessen Kompression und einer sicheren Verbindung zwischen Grundkörper 2 und Befestigungselement 22 beiträgt.

Das Befestigungselement 22 bildet ein drittes Exzenterteil, das den beiden am Grundkörper 2 einstückig angeformten Exzenterteilen diametral gegenüber liegt und das Dämpfungsverhalten des Schwingungstilgers weiter verbessert.

Der Grundkörper 2 der in den Fig. 23 bis 25 dargestellten Ausführungsform hat im Wesentlichen die gleiche Form wie der in den Fig. 19, 21 und 22 gezeigte Grundkörper 2 mit der Ausnahme, dass seine zwischen den beiden Exzenterteilen 18, 18' liegende Außenwand etwas stärker konvex nach außen gewölbt ist.

An ihrem in der Mitte zwischen den beiden Exzenterteilen 18,18' liegenden Scheitel trägt diese Außenwand eine radial nach oben vorspringende Rippe 28, die sich nur über einen Teil der axialen Länge des Grundkörpers 2 erstreckt.

Die Exzenterteile 18, 18' sind genauso aufgebaut und angeordnet wie beim vorherigen Ausführungsbeispiel, sodass sich eine erneute Beschreibung erübrigt. Auch hier ist im Bereich des längs der der Mantellinie 5 verlaufenden Schlitzes keine V-förmige Kerbe erforderlich, da die Montage des Grundkörpers 2 auf einem Einspritzleitungsrohr ebenfalls dadurch erfolgen kann, dass die beiden Exzenterteile 18, 18' zu einander hin gedrückt werden.

Wie man insbesondere der Fig. 23 entnimmt, ist bei diesem Ausführungsbeispiel ein C-förmiges, aus einem plastisch verformbaren Material, insbesondere Metall bestehendes Befestigungselement 29 so ausgebildet, dass es für eine Vormontage von oben, d.h. von der der geschlitzten Mantellinie 5 gegenüberliegenden Seite her auf den Grundkörper 2 aufgesetzt werden kann. Dabei sind seine beiden Schenkel 30, 30 so weit auseinandergespreizt, dass der Grundkörper 2 leicht zwischen sie eingeführt werden kann. Am Scheitel seiner C-Form besitzt das Befestigungselement 29 eine Ausnehmung 32, die so dimensioniert ist, dass die Rippe 28 des Grundkörpers 2 bei der Vormontage durch sie hindurch treten kann. Weiterhin sind im Befestigungselement 29 zwei zu seinem Scheitel symmetrisch liegende, durchgehende Fensteröffnungen 33, 33 vorgesehen, die bei diesem Vorgang ein Hindurchtreten der Flanschteile 20, 20' der beiden Exzenterteile 18, 18' ermöglichen.

Auf diese Weise können der Grundkörper 2 und das Befestigungselement 29 in besonders vorteilhafter Weise zu einer vormontierten Baueinheit zusammengefügt werden, die in der oben beschriebenen Weise auf ein zu dämpfendes Einspritzleitungsrohr aufgesetzt und dann durch plastische Verformung, d.h. durch Zusammendrücken der abgespreizten Schenkel 30, 30 des Befestigungselementes 29 drehfest montiert werden kann. Dadurch, dass das Befestigungselement 29 auf dem Grundkörper 2 vormontiert werden kann, lässt sich eine erhebliche Zeiteinsparung bei der Endmontage des Schwingungstilgers auf dem jeweiligen Einspritzleitungsrohr erzielen.

Auch hier bildet das Befestigungselement 29 ein drittes Exzenterteil, durch welches das Dämpfungsverhalten des Schwingungstilgers weiter verbessert werden kann.

## Patentansprüche

1. Nach dem Masse-Feder-Prinzip arbeitender Schwingungstilger (1), der einen aus einem elastomeren, schwingungsdämpfenden Material bestehenden Grundkörper (2) mit einem in Längsrichtung durchgehenden Innenhohlraum (3) umfasst, und dessen Außenwand über die gesamte axiale Länge des Grundkörpers längs einer Mantellinie (5) aufgeschnitten ist, sodass er aufgespreizt und senkrecht zu seiner Längsachse auf ein Einspritzleitungsrohr so aufgeschoben werden kann, dass die Längsachse (4) seines Innenhohlraums (3) mit der Rohr-Längsachse zusammenfällt, wobei der Innendurchmesser des Innenhohlraums (3) des Grundkörpers (2) an den Außendurchmesser des Einspritzleitungsrohrs zur Erzielung einer drehfesten Montage angepasst ist, und wobei am Grundkörper (2) über seine Außenkontur nach außen vorstehende Exzenterteile vorgesehen sind, sodass der Schwingungstilger (1) eine bezüglich seiner Längsachse (4) exzentrische Masseverteilung aufweist,
**dadurch gekennzeichnet, dass**
am Grundkörper (2) auf der Seite, die bezüglich der Längsachse (4) der aufgeschnittenen Mantellinie (5) gegenüber liegt, zwei über die Außenkontur des Grundkörpers (2) nach außen vorstehende Exzenterteile (6, 6'; 14, 14'; 18, 18') vorgesehen sind, von denen sich jeder zumindest über einen Teil der axialen Länge des Grundkörpers (2) erstreckt, und deren Exzentrizitätsachsen (E, E'), die von der Längsachse (4) in radialer Richtung ausgehend durch den Masseschwerpunkt des jeweiligen Exzenterteils (6, 6'; 14, 14'; 18, 18') verlaufen, miteinander einen sowohl von 0° als auch von 180° verschiedenen Winkel einschließen.

2. Schwingungstilger (1) nach Anspruch 1, **dadurch gekennzeichnet, dass** der von den Exzentrizitätsachsen (E, E') eingeschlossene Winkel 90° beträgt.

3. Schwingungstilger (1) nach Anspruch 1 oder 2, **dadurch gekennzeichnet, dass** der durchgehende Innenhohlraum (3) eine aufgeraute Innenwand besitzt.

4. Schwingungstilger (1) nach Anspruch 1 oder 2, **dadurch gekennzeichnet, dass** der durchgehende Innenhohlraum (3) einen kreiszylindrischen Querschnitt aufweist, dessen Innendurchmesser größer ist als der Außendurchmesser des Einpritzleitungsrohrs, auf dem der Schwingungstilger (1) montiert werden soll, und dass die Innenwand des Innenhohlraums (3) mit einer radial nach innen vorstehenden Verzahnung (16) ausgebildet ist, deren radiale Erstreckung so bemessen ist, dass sie im montierten Zustand mit ihren innen liegenden Enden mit der Außenwand des Einpritzleitungsrohrs in drehfestem Eingriff steht.

5. Schwingungstilger (1) nach einem der Ansprüche 1 bis 4, **dadurch gekennzeichnet, dass** der Grundkörper (2) einen in etwa quadratischen Außenquerschnitt aufweist, und dass jeder der beiden Exzenterteile einen entlang einer der Längskanten des Grundkörpers (2) verlaufenden, mit diesem einstückig verbundenen, zur Exzentrizitätsachse symmetrischen Steg (19) umfasst, der an seiner vom Grundkörper (2) entfernt liegenden Außenkante einen plattenförmigen, gegenüber der Stegdicke verbreiterten, zur Exzentrizitätsachse (E, E') ebenfalls symmetrischen Flanschteil (20) trägt.

6. Schwingungstilger (1) nach einem der Ansprüche 1 bis 5, **dadurch gekennzeichnet, dass** ein Befestigungselement (22; 29) vorgesehen ist, das im montierten Zustand unter plastischer Verformung auf den Grundkörper (2) so aufgequetscht ist, dass es ihn auf wenigstens drei Seiten umschließt.

7. Schwingungstilger (1) nach einem der Ansprüche 1 bis 6, **dadurch gekennzeichnet, dass** zusätzlich zu den beiden mit dem Grundkörper (2) einstückig verbundenen Exzenterteilen (18, 18') ein auf den Grundkörper (2) aufsteckbares, als dritter Exzenterteil wirkendes Befestigungselement (22, 29) vorgesehen ist.

8. Schwingungstilger (1) nach Anspruch 7, **dadurch gekennzeichnet, dass** das als dritter Exzenterteil wirkende Befestigungselement (22, 29) aus Metall besteht.

9. Einspritzleitungs-System für einen Dieselmotor **dadurch gekennzeichnet, dass** es wenigstens eine Einspritzleitung und wenigstens einen auf dieser Einspritzleitung montierten Schwingungstilger (1) nach einem der vorhergehenden Ansprüche umfasst.

## Claims

1. A vibration damper (1) operating according to the mass-spring principle comprising a main body (2) consisting of an elastomeric, vibration damping material and having an inside hollow space (3) which passes therethrough in the longitudinal direction, the outside wall of said main body being cut along its entire axial length along a generatrix (5), so that it can be spread open and pushed perpendicular to its longitudinal axis onto an injection line pipe so that the longitudinal axis (4) of its inside hollow space (3) coincides with the longitudinal axis of the pipe, wherein the inner diameter of the inside hollow space (3) of the main body (2) is adapted to the outer diameter of the injection line pipe to achieve a non-rotatable mounting, and wherein on the main body (2) on its outer contour outwardly projecting eccentric parts are provided so that the vibration damper (1) with respect to its longitudinal axis (4) has an eccentric mass distribution,
**characterized in that**
on the main body (2) on the side opposite the longitudinal axis (4) of the cut generatrix (5), two eccentric portions (6, 6', 14', 14', 18, 18 ') projecting outwards beyond the outer contour of the main body (2) are provided, each of which extends over at least a part of the axial length of the main body (2), the axes of eccentricity (E, E') of said eccentric portions which axes extend from the longitudinal axis (4) in the radial direction through the center of gravity of the respective eccentric portions (6, 6', 14, 14', 18, 18 ') enclose with each other an angle different from both 0 ° and 180 °.

2. Vibration damper (1) according to claim 1, **characterized in that** the angle which is included by the axes of eccentricity (E, E ') i is 90 °.

3. Vibration damper (1) according to claim 1 or 2, **characterized in that** the passing through inside hollow space (3) has a roughened inner wall.

4. Vibration damper (1) according to claim 1 or 2, **characterized in that** the passing through inside hollow space (3) has a circular cylindrical cross-section whose inner diameter is greater than the outer diameter of the injection line pipe, on which the vibration damper (1) is to be mounted, and that the inner wall of the inside hollow space (3) is formed with a radially inwardly projecting tooth arrangement (16), the radial extent of which is dimensioned such that, in the mounted state, it is, with its inner ends, in a non-rotatable fixed engagement with the outside wall of the injection line pipe.

5. Vibration damper (1) according to one of claims 1 to 4, **characterized in that** the main body (2) has an approximately square outer cross-section, and **in that** each of the two eccentric portions comprises a leg (19) extending along one of the longitudinal edges of the main body (2), being integrally connected therewith and being symmetric with respect to the axis of eccentricity, said leg having on its outer edge, remote from the main body (2), a flange portion (20) which is wider than the thickness of the leg and is also symmetrical to the eccentricity axis (E, E ') thereof.

6. Vibration damper (1) according to one of claims 1 to 5, **characterized in that** a fastening element (22; 29) is provided, which is crimped in the assembled state under plastic deformation onto the main body (2) so that it encloses at least three sides thereof.

7. Vibration damper (1) according to one of claims 1 to 6, **characterized in that** in addition to the two eccentric parts (18, 18 ') being integrally connected to the main body (2) a third eccentric portion (22, 29) is provided which can be fitted on to the main body (2) and acts as a fastening element.

8. Vibration damper (1) according to claim 7, **characterized in that** the fastening element acting as a third eccentric portion (22, 29) is made of metal.

9. Injection line system for a diesel engine, **characterized in that** it includes at least one injection line and at least one vibration damper (1) according to one of the preceding claims and being mounted on this injection line.

## Revendications

1. Amortisseur à masse accordée (1) qui fonctionne selon le principe de masse-ressort et qui comporte un corps de base (2) constitué d'un matériau élastomère amortissant les vibrations et pourvu d'une cavité intérieure (3) continue dans la direction longitudinale, et dont la paroi extérieure est découpée le long d'une génératrice (5) sur toute la longueur axiale du corps de base, de manière à pouvoir être écartée et poussée perpendiculairement à son axe longitudinal sur un tube de conduite d'injection, de sorte que l'axe longitudinal (4) de la cavité intérieure (3) dudit corps de base coïncide avec l'axe longitudinal du tube, dans lequel le diamètre intérieur de la cavité intérieure (3) du corps de base (2) est adapté au diamètre extérieur du tube de conduite d'injection afin d'obtenir un montage bloqué en rotation, et
dans lequel des pièces excentriques faisant saillie vers l'extérieur du contour extérieur du corps de base (2) sont prévues sur celui-ci, de sorte que l'amortisseur à masse accordée (1) présente une répartition excentrique des masses par rapport à son axe longitudinal (4),
**caractérisé en ce que**
deux pièces excentriques (6, 6' ; 14, 14', 18, 18') faisant saillie vers l'extérieur du contour extérieur du corps de base (2) sont prévues sur le corps de base (2), sur la face opposée à la génératrice (5) découpée par rapport à l'axe longitudinal (4), pièces dont chacune s'étend au moins sur une partie de la longueur axiale du corps de base (2), et dont les axes d'excentricité (E, E'), qui s'étendent à partir de l'axe longitudinal (4) dans la direction radiale en passant par le centre de gravité de la pièce excentrique (6, 6' ; 14, 14', 18, 18') respective, forment entre eux un angle différent aussi bien de 0° que de 180°.

2. Amortisseur à masse accordée (1) selon la revendication 1, **caractérisé en ce que** l'angle formé par les axes d'excentricité (E, E') atteint 90°.

3. Amortisseur à masse accordée (1) selon la revendication 1 ou 2, **caractérisé en ce que** la cavité intérieure (3) continue possède une paroi intérieure rendue rugueuse.

4. Amortisseur à masse accordée (1) selon la revendication 1 ou 2, **caractérisé en ce que** la cavité intérieure (3) continue présente une section transversale cylindrique, dont le diamètre intérieur est supérieur au diamètre extérieur du tube de conduite d'injection sur lequel l'amortisseur à masse accordée (1) vise à être monté, et **en ce que** la paroi intérieure de la cavité intérieure (3) est pourvue d'une denture (16) faisant radialement saillie vers l'intérieur, dont l'étendue radiale est dimensionnée de telle sorte que, une fois montée, la denture est en prise bloquée en rotation, par ses extrémités intérieures, avec la paroi extérieure du tube de conduite d'injection.

5. Amortisseur à masse accordée (1) selon l'une quelconque des revendications 1 à 4, **caractérisé en ce que** le corps de base (2) présente une section transversale extérieure sensiblement carrée, et **en ce que** chacune des deux pièces excentriques comporte un élément jointif (19) s'étendant le long d'un des bords longitudinaux du corps de base (2), relié d'une seule pièce à celui-ci et symétrique par rapport à l'axe d'excentricité, lequel élément jointif porte sur son bord extérieur éloigné du corps de base (2) une partie bride (20) en forme de plaque, élargie par rapport à l'épaisseur de l'élément jointif, et elle aussi symétrique par rapport à l'axe d'excentricité (E, E').

6. Amortisseur à masse accordée (1) selon l'une quelconque des revendications 1 à 5, **caractérisé en ce qu'**un élément de fixation (22 ; 29) est prévu, qui, une fois monté, est tellement pressé sur le corps de base (2), entraînant une déformation plastique, qu'il entoure ledit corps sur au moins trois côtés.

7. Amortisseur à masse accordée (1) selon l'une quelconque des revendications 1 à 6, **caractérisé en ce qu'**un élément de fixation (22, 29) agissant en tant que troisième pièce excentrique et pouvant être emboîté sur le corps de base (2) est prévu en plus des deux pièces excentriques (18, 18') reliées d'une seule pièce au corps de base (2).

8. Amortisseur à masse accordée (1) selon la revendication 7, **caractérisé en ce que** l'élément de fixation (22, 29) agissant comme troisième pièce excentrique est constitué de métal.

9. Système de conduite d'injection pour un moteur diesel, **caractérisé en ce qu'**il comporte au moins une conduite d'injection et au moins un amortisseur à masse accordée (1) selon l'une quelconque des revendications précédentes monté sur cette conduite d'injection.
